# EUROPÄISCHE PATENTSCHRIFT

(11) **EP 2 860 614 B1**
(45) Veröffentlichungstag und Bekanntmachung des Hinweises auf die Patenterteilung: **13.09.2017**
(21) Anmeldenummer: 13199374.3
(22) Anmeldetag: 23.12.2013
(51) Int. Cl.: G06F 3/01

(54) **Verfahren und Vorrichtung zur Handhabung grafisch dargestellter Daten**
Method and device for handling graphically displayed data
Procédé et dispositif de manipulation de données représentées graphiquement

(30) Priorität: 10.10.2013 DE 102013017118
(43) Veröffentlichungstag der Anmeldung: 15.04.2015
(73) Patentinhaber: Elmos Semiconductor Aktiengesellschaft, 44227 Dortmund (DE)
(72) Erfinder: Burchard, Dr. Bernd, 45276 Essen (DE); Hill, Uwe, 75196 Remchingen (DE); Mindl, Dr. Anton, 58515 Lüdenscheid (DE)
(74) Vertreter: Durm & Partner

(56) Entgegenhaltungen:
- DE-A1-102009 006 082
- DE-A1-102011 075 067
- US-A1- 2011 083 089
- US-A1- 2011 285 657

## Beschreibung

Die vorliegende Erfindung betrifft ein Verfahren und eine Vorrichtung zur Handhabung grafisch dargestellter Daten. Ein solches Verfahren ist beispielsweise notwendig, um virtuelle Objekte auf einem Bildschirm zu bewegen und zu modifizieren. Solche Mensch-Maschine-Schnittstellen sind heute in der Technik weit verbreitet. Diese Art Schnittstellen werden auch Human-Machine-Interface (HMI) genannt.

Die Nachfrage nach derartigen Anwendungen wird aufgrund der steigenden Technizität und Verbreitung von geeigneten Geräten ständig zunehmen. Dabei werden die Anforderungen an die Handhabung der Daten ebenfalls steigen und an Komplexität gewinnen, genauso wie die Anforderungen an die Darstellung der Daten auf den Bildschirmen und an die Bildschirme selbst. Die Erwartungen an die Mensch-Maschinen-Schnittstellen werden sich grundlegend ändern. Gleiches gilt für die Einsatzgebiete und Anforderungen an die Präzision der Steuerungen für die Modifikation grafisch dargestellter Daten.

Hierzu wird es notwendig sein, die Darstellung der Daten in Abhängigkeit von den Anwendungsfällen, den technischen Gegebenheiten oder den Benutzeranforderungen zu verändern und zu optimieren. Insbesondere wird eine hohe Robustheit und Zuverlässigkeit gefordert werden. Dies geht einher mit einer Miniaturisierung der Geräte und Bildschirme. Gleichzeitig sollen die Schnittstellen und Anwendungen immer günstiger werden, was der steigenden Komplexität widersprüchlich gegenübersteht.

Aus der DE 10 2011 075 067 A1 ist eine Berührungsbildschirmeinheit bekannt, die Annäherungssensoren umfasst und die Annäherung eines Eingabeobjekts erkennt. Bei Annäherung des Eingabeobjekts wird ein Markierungsbereich um einen möglichen Auftreffpunkt auf dem Bildschirm angezeigt, dessen Größe von der Entfernung zum Eingabeobjekt abhängt.

Aus der DE 10 2009 006 082 A1 ist eine ähnliche Einheit bekannt, bei der mittels eines vorgeschlagenen Verfahrens die Form eines Auswahlobjekts auf einem Bildschirm von der Distanz eines Eingabeobjekts (z.B. Finger) abhängt. Die US 2011/0083089 A1 beschreibt eine Berührungsbildschirmeinheit mit Sensoren zur Erfassung des Abstands und der Position eines Eingabeobjektes. Hierbei können verschiedene stiftartige Objekte als Eingabeobjekte oder auch ein Finger des Benutzers als Eingabeobjekt benutzt werden. Dabei kann ein entsprechend dargestelltes Markierungsobjekt oder Markierungsbereich für unterschiedliche Eingabeobjekte unterschiedlich groß dargestellt werden.

Aus den Erfordernissen des Stands der Technik ergibt sich die Aufgabe, die Handhabung grafisch dargestellter Daten zu verbessern und die Bedienung durch den Benutzer zu vereinfachen, insbesondere die Präzision zu steigern.

Gelöst wird die vorliegende Aufgabe durch ein Verfahren mit den Merkmalen des Anspruchs 1 sowie eine Vorrichtung mit den Merkmalen des Anspruchs 13.

Grafische Daten, die beispielsweise in Form eines virtuellen Objekts auf einem Bildschirm dargestellt werden sollen, liegen in einer Recheneinheit vor oder können von einer derartigen Recheneinheit erzeugt werden. Häufig sind die grafischen Daten als Vektoren definiert, so dass die virtuellen Objekte nicht selbst direkt beschrieben sind, sondern durch die Vektoren dargestellt und erzeugt werden können. Um derartige Objekte, die auf einem Bildschirm angezeigt werden, zu manipulieren, insbesondere zu bewegen oder zu modifizieren, werden die in der Recheneinheit vorliegenden grafischen Daten mit einer ersten Auflösung auf einer zweidimensionalen Mannigfaltigkeit eines dreidimensionalen Raumes abgebildet. Dazu wird eine Abbildungsfunktion oder Abbildungsvorschrift verwendet, die bevorzugt jedenfalls teilweise eindeutig und wenigstens in einzelnen Bereichen auch eineindeutig ist. Die zweidimensionale Mannigfaltigkeit kann beispielsweise durch einen Bildschirm gebildet werden.

In einem weiteren Schritt wird die räumliche Position eines Eingabeobjekts im dreidimensionalen Raum erfasst. Es kann auch alternativ oder zusätzlich die Orientierung des Eingabeobjekts im Raum ermittelt werden. Dies geschieht jeweils mittels einer Messvorrichtung oder von Sensoren. Das Eingabeobjekt dient als Manipulator, um die grafisch dargestellten Daten zu verändern oder um ein in der zweidimensionalen Mannigfaltigkeit dargestelltes Objekt zu bewegen oder auf andere Weise zu modifizieren. Das Eingabeobjekt kann beispielsweise ein Finger, ein Zeh, eine Hand, ein Fuß, ein Arm oder Bein oder ein anderes Körperteil, etwa Kopf oder insbesondere eine Extremität sein. Daneben ist es auch denkbar, dass das Eingabeobjekt ein Bedienelement ist, das von einem Benutzer in der Hand gehalten wird oder an einen Benutzer angebracht wird. Beispielsweise könnte ein Bedienelement als Armband, um Bein oder Arm oder eingenäht in die Tasche eines Ärmels oder in den Ärmel selbst oder als Schmuckstück oder als Kopfband um den Kopf etc. getragen werden. Andere oder ähnliche Ausführungen sind denkbar. Daneben könnte ein Bedienelement auch beispielsweise die Form eines Stiftes oder Schlägers aufweisen.

Die von der Messvorrichtung ermittelten (Positions-) Daten werden mittels einer Recheneinheit weiterverarbeitet. Dies ist bevorzugt die Recheneinheit, in der die grafischen Daten vorhanden sind oder erzeugt werden.

Die Position des Eingabeobjekts wird mittels eines dreidimensionalen Koordinatensystems quantifiziert. Das Koordinatensystem ist so gewählt und ausgebildet, dass die zweidimensionale Mannigfaltigkeit, auf der die grafischen Daten abgebildet und dargestellt sind, in einer der Koordinatenflächen des dreidimensionalen Koordinatensystems liegt. Beispielsweise kann das Koordinatensystem ein kartesisches Koordinatensystem sein, bei dem die zweidimensionale Mannigfaltigkeit eine Koordinatenfläche bildet, beispielsweise die X-Y-Koordinatenebene.

Allerdings könnten die grafisch dargestellten Daten auch auf einem Bildschirm dargestellt werden, der jedenfalls teilweise nicht eben, sondern gekrümmt ist. Für den gekrümmten Bildschirm ist ein dreidimensionales Koordinatensystem anzugeben, bei dem die Bildschirmebene eine nicht ebene Koordinatenfläche des dreidimensionalen Koordinatensystems ist. Dies unterscheidet sich von den herkömmlichen Bildschirmen im Stand der Technik, die in der Regel eine ebene Fläche darstellen. Die grafischen Daten liegen in der Regel in Bezug auf ein kartesisches Koordinatensystem vor. Hilfsweise wird bevorzugt weilweise ein virtuelles oder reelles kartesisches Ur-Bild erzeugt. Bei einer nicht ebenen Koordinatenfläche ist beispielsweise eine bijektive Zuordnung eines kartesischen Koordinatensystems zu dem gekrümmten dreidimensionalen Koordinatensystem nicht notwendigerweise möglich. Vielmehr ist es denkbar, dass einige Punkte eines kartesischen Koordinatensystems auf denselben Bildpunkt eines gekrümmten Bildschirms abgebildet werden und beispielsweise dabei nach einer vorgegebenen Regel der Inhalt einzelner Blickpunkte überschrieben wird. Würde die Abbildungsfunktion beispielsweise zum Koordinatenursprung hin erfolgen, so werden Bildpunkte in der Nähe des Ursprungs des kartesischen Koordinatensystems mit Werten von äußeren Punkten des kartesischen Koordinatensystems überschrieben, wenn diese auf den gleichen Bildschirmpunkt abgebildet werden sollen oder müssen.

Nachdem die Position des Eingabeobjekts im dreidimensionalen Raum mittels eines dreidimensionalen Koordinatensystems quantifiziert worden ist, wird der Abstand des Eingabeobjekts von der zweidimensionalen Mannigfaltigkeit entlang einer Rückverfolgungskurve zwischen dem Eingabeobjekt und dem Auftreffpunkt der Rückverfolgungskurve auf die zweidimensionale Mannigfaltigkeit ermittelt.

Daneben wird ein Markierungspunkt auf der zweidimensionalen Mannigfaltigkeit ermittelt, der in einem vordefinierten Abstand von dem Auftreffpunkt angeordnet ist. Der vordefinierte Abstand ist dabei wenigstens über einen vorgegebenen Zeitraum konstant; bevorzugt ist der Abstand zwischen Auftreffpunkt und dem Markierungspunkt stets konstant. Der Abstand zwischen Auftreffpunkt und Markierungspunkt kann auch Null sein, so dass Auftreffpunkt und Markierungspunkt in einem Punkt zusammenfallen. Es ist auch denkbar, dass der Abstand zwischen Auftreffpunkt und Markierungspunkt variabel ist und von anderen Einflussfaktoren, beispielsweise der Bewegung oder Position des Eingabeobjekts abhängen.

Erfindungsgemäß wird der Markierungspunkt auf der zweidimensionalen Mannigfaltigkeit angezeigt. Der Markierungspunkt ist dabei Teil eines Markierungsbereichs oder eines Markierungsobjekts. Der Markierungsbereich kann beispielsweise ein kreisförmiger oder auch anders elliptischer oder beliebig anders geformter Bereich auf der zweidimensionalen Mannigfaltigkeit sein. Ein Markierungsobjekt kann beispielsweise ein auf einem Bildschirm dargestellter Cursor oder Zeiger sein.

Der Markierungspunkt und/oder der Markierungsbereich und/oder das Markierungsobjekt werden mittels einer Markierungsfunktion ermittelt. Diese Ermittlung erfolgt bevorzugt in einer Recheneinheit, besonders bevorzugt in der Recheneinheit, in der auch die grafisch dargestellten Daten vorliegen.

In einem weiteren bevorzugten Verfahrensschritt erfolgt die Festlegung und Darstellung des Markierungsbereichs zusätzlich zu den grafischen Daten auf der zweidimensionalen Mannigfaltigkeit. Bevorzugt ist der Markierungsbereich um den Markierungspunkt herum gebildet. Der Markierungspunkt kann beispielsweise im Zentrum oder Schwerpunkt des Markierungsbereichs liegen. Es ist aber auch möglich, dass der Markierungspunkt am Rand oder auf dem Rand des Markierungsbereichs angeordnet ist. Die Festlegung des Markierungsbereichs erfolgt bevorzugt ebenfalls mittels der Markierungsfunktion.

Neben der Darstellung und Festlegung eines Markierungsbereichs kann auch ein Markierungsobjekt, beispielsweise ein Cursor zusätzlich zu den grafischen Daten auf der zweidimensionalen Mannigfaltigkeit dargestellt und festgelegt werden. Der Markierungspunkt kann beispielsweise die Spitze eines Zeigers bilden.

Bei der Darstellung und Festlegung des Markierungsobjekts und des Markierungsbereichs wird das Ergebnis der angewendeten Markierungsfunktion bevorzugt von dem Markierungsobjekt und/oder dem Markierungsbereich repräsentiert. Auch ein optionales Verändern des Markierungsbereichs oder des Markierungsobjekts innerhalb der zweidimensionalen Mannigfaltigkeit erfolgt bevorzugt mittels der Markierungsfunktion.

In einer bevorzugten Ausbildung des erfindungsgemäßen Verfahrens kann das Ergebnis der Markierungsfunktion zumindest zeitweise von den Koordinaten des Auftreffpunkts abhängen. Das Ergebnis der Markierungsfunktion kann auch von den Koordinaten des Markierungspunkts auf der zweidimensionalen Mannigfaltigkeit sowie von dem Abstand zwischen dem Auftreffpunkt und dem Markierungspunkt auf der zweidimensionalen Mannigfaltigkeit abhängig sein.

In einer ebenfalls bevorzugten Ausführungsform des erfindungsgemäßen Verfahrens ist die zweidimensionale Mannigfaltigkeit in wenigstens einem Punkt gekrümmt. Die zweidimensionale Mannigfaltigkeit kann auch an mehreren Punkten oder in allen Punkten gekrümmt sein. Sie ist dann beispielsweise eine mehrfach gekrümmte Fläche im dreidimensionalen Raum. Beispielsweise kann die zweidimensionale Mannigfaltigkeit die Pixelebene eines Bildschirms oder auch die Oberfläche eines Bildschirms repräsentieren.

Insbesondere bei gekrümmten Bildschirmen gestaltet sich die Handhabung grafisch dargestellter Daten auf den Bildschirm und deren Manipulation schwierig. So ist bei einem wenigstens teilweise nicht ebenen Bildschirm zunächst die Betrachtung des Bildschirms als nicht ebene Fläche wichtig. Die zweidimensionale Mannigfaltigkeit, die beispielsweise die Bildschirmoberfläche repräsentieren kann, ist vorzugsweise eine Koordinatenfläche des gewählten dreidimensionalen Koordinatensystems. So ist auch das Koordinatensystem entsprechend der Krümmung der zweidimensionalen Mannigfaltigkeit vorzugsweise nicht eben. Es werden folglich vorzugsweise nicht kartesische Koordinatensysteme verwendet. Bei der Verwendung nicht kartesischer Koordinatensysteme ist es vielmehr denkbar, dass einige Punkte eines in einem kartesischen Koordinatensystem dargestellten Objekts auf denselben Bildpunkt abgebildet werden und dabei nach vorgegebenen Regeln den Inhalt einzelner Bildpunkte überschrieben werden.

Ebenso ist es bei der Verwendung nicht kartesischer Koordinatensysteme ebenfalls denkbar, dass ein Punkt eines in einem kartesischen Koordinatensystem dargestellten Objekts auf mehrere Bildpunkte abgebildet wird. Die 1:1 Zuordnung eines Punkts im kartesischen Koordinatensystem zu genau einem Bildpunkt und umgekehrt besteht also bei einem nicht kartesischen Koordinatensystem nicht mehr unbedingt.

Das erfindungsgemäße Verfahren und die entsprechenden Vorrichtungen haben folglich den Vorteil, dass auch Bildschirme mit komplexeren Topologien verwendet werden können oder eine Mensch-Maschine-Schnittstelle zu einem gekrümmten Bildschirm geeignet darstellen können. Ein derartiger Bildschirm kann beispielsweise eine Ausstülpung in Form eines Henkels, beispielsweise eines Autotürgriffs oder eines anderen Bedienelements aufweisen. Die vorliegende Erfindung ermöglicht somit ganz neue Freiheitsgrade bei der Gestaltung einer Mensch-Maschine-Schnittstelle.

Beispielsweise ist es schon mit den heute verfügbaren Technologien denkbar, Bildschirme mit komplexeren Topologien aus einzelnen kleineren Bildschirmen aufzubauen, die sich wie Kacheln aneinanderreihen. Die sich ergebende Bildschirmoberfläche ist eine zweidimensionale Mannigfaltigkeit. Es ist für den Fachmann ohne Weiteres offensichtlich, dass auch ebene Bildschirmflächenbereiche zu solchen zweidimensionalen Mannigfaltigkeiten zählen. Sie werden von der Erfindung ausdrücklich eingeschlossen.

Gemäß der vorliegenden Erfindung werden die in einer Recheneinheit vorhandenen oder erzeugten grafischen Daten auf einer zweidimensionalen Mannigfaltigkeit mittels einer Abbildungsfunktion abgebildet. Dies kann entweder direkt geschehen oder durch Erzeugung eines virtuellen oder reellen Ur-Bildes, beispielsweise in einem zweidimensionalen Koordinatensystem. Selbst wenn kein Ur-Bild ermittelt wird, so müssen die grafischen Daten geeignet abgespeichert sein, damit sie stets in der zweidimensionalen Mannigfaltigkeit erneut dargestellt werden können. Dies gilt auch, wenn der Markierungspunkt zunächst an einer Stelle in der zweidimensionalen Mannigfaltigkeit angeordnet ist, an der auch die grafischen Daten dargestellt werden, und in einem späteren Schritt der Markierungspunkt derart verschoben wird, dass er außerhalb dieser grafisch dargestellten Daten positioniert ist. Die grafisch dargestellten Daten müssen dann erneut an der ursprünglichen Stelle sichtbar gemacht werden können. Dies gilt insbesondere, wenn um den Markierungspunkt ein Markierungsbereich dargestellt wird, der auch eine andere Auflösung haben kann als die zweidimensionale Mannigfaltigkeit selbst.

In einer bevorzugten Ausführungsform kann es unter gewissen technischen Anforderungen nützlich sein, vor Abbildung der Grafik auf der zweidimensionalen Mannigfaltigkeit diese zunächst in einem zweidimensionalen Koordinatensystem als Ur-Bild zu erzeugen und gegebenenfalls abzubilden und dann, in einem weiteren Schritt, bevorzugt auf einem Bildschirm, bevorzugt mit einer komplexeren Topologie, abzubilden. Für die Erzeugung des Ur-Bilds können beispielsweise vektorielle Daten, Video-Datenströme, grafische Objekte oder Ähnliches verwendet werden. Eine Video-Verarbeitung zur Erzeugung eines Videodatenstromes mit einer einheitlichen Bildfrequenz aus unterschiedlichen Videoquellen ist beispielsweise in der EP1142317B1 beschrieben. Sie können beispielsweise in einer Auflösung in dem zweidimensionalen Koordinatensystem erzeugt werden, die von der Auflösung in der zweidimensionalen Mannigfaltigkeit abweichen kann, jedoch auch gleich sein kann. Das zweidimensionale Koordinatensystem kann bspw. ein kartesisches Koordinatensystem sein.

Die Abbildungsfunktion wird zur Abbildung der grafischen Daten auf der zweidimensionalen Mannigfaltigkeit des Bildschirms verwendet. Dadurch werden die Daten mit einer je Bildpunkt lokal definierten Auflösung dargestellt, die jedoch bevorzugt nicht an allen Orten des Bildschirms gleich sein muss und typischer Weise u.a. vom Verlauf der Krümmung der zweidimensionalen Mannigfaltigkeit abhängt. Sie kann jedoch je nach Anwendung auch an allen Orten gleich sein. Beispielsweise kann die Auflösung der zweidimensionalen Mannigfaltigkeit von den Koordinaten der Punkte eines optionalen kartesischen Koordinatensystems, beispielsweise zur Darstellung des Ur-Bildes abhängen.

Zur Darstellung des Ur-Bildes auf der zweidimensionalen Mannigfaltigkeit wird dann die gleiche oder eine andere Abbildungsfunktion verwendet, die auch ohne den Zwischenschritt der Darstellung des Ur-Bildes angewandt wird.

In einer bevorzugten Ausführungsform des erfindungsgemäßen Verfahrens erfolgt die Darstellung der grafischen Daten in dem Markierungsbereich, zu dessen Teilmenge auch der Markierungspunkt gehört, in einer zweiten Auflösung. Bevorzugt ist die zweite Auflösung von der ersten Auflösung der zweidimensionalen Mannigfaltigkeit verschieden. In diesem Fall kann der Markierungsbereich beispielsweise eine Lupenfunktion repräsentieren. In dem Markierungsbereich werden die grafischen Daten dann beispielsweise mit einer höheren Auflösung dargestellt, so dass Einzelheiten größer erscheinen. Dies führt dazu, dass in einigen Bereichen nicht alle Bildpunkte des Ur-Bildes (sofern erzeugt) oder nicht alle grafischen Daten auf der zweidimensionalen Mannigfaltigkeit dargestellt werden können.

Wird der Markierungsbereich von der soeben dargestellten Position wegbewegt, so wandert die höhere Auflösung mit dem Markierungsbereich über die zweidimensionale Mannigfaltigkeit. Der bisherige Bereich muss dann wieder in der ersten Auflösung dargestellt werden. Dazu ist es notwendig, dass die grafischen Daten wieder in ihrer ursprünglichen Ansicht auf der zweidimensionalen Mannigfaltigkeit angezeigt werden können.

Bei der Verwendung eines Markierungsbereichs mit einer geänderten Auflösung sind jedoch einige Punkte der grafischen Daten, oder bei Verwendung eines Ur-Bildes einige Punkte des Ur-Bildes nicht mehr abbildbar oder werden gegebenenfalls in der Auflösung komprimiert, also nichtlinear verzerrt. Die Abbildung ist also insgesamt nichtlinear.

Die Darstellung des Markierungsbereichs erfolgt mit der Markierungsfunktion, die also eine Abbildung ist. Diese Markierungsfunktion ist folglich eine lineare oder eine nichtlineare Abbildung. Durch sie wird bevorzugt mindestens einer der Bildpunktparameter in der zweidimensionalen Mannigfaltigkeit innerhalb des Markierungsbereichs verändert. Zu den Bildpunktparametern gehören dabei nicht nur die Auflösung, insbesondere die Vergrößerung, sondern auch der Kontrast. Hierbei werden die Bildpunktparameter jeweils in Beziehung zu benachbarten oder anderen Bildpunktparametern der zweidimensionalen Mannigfaltigkeit gesetzt. Weitere Bildpunktparameter, die durch die Markierungsfunktion verändert werden können, sind beispielsweise die Helligkeit des Bildschirms, die Farbe oder die Farbsättigung. Weitere Bildpunktparameter sind denkbar.

In einer bevorzugten Ausführung ist die Markierungsfunktion bezüglich wenigstens eines dieser Bildpunktparameter nichtlinear. Es können folglich auch mehrere Bildpunktparameter gleichzeitig verändert werden.

Insbesondere bei der Darstellung eines Markierungsbereichs kann beispielsweise die Helligkeit eines bestimmten Bereichs vergrößert werden. Somit lässt sich nicht nur eine Lupen-Funktion, sondern auch eine Art Spot-Funktion realisieren. Die vorliegende Erfindung ermöglicht also auf einer zweidimensionalen Mannigfaltigkeit eines beliebig geformten Bildschirms eine Lupen-Funktion oder eine Spot-Funktion mittels eines Eingabeobjekts im dreidimensionalen Raum zu realisieren.

Das Eingabeobjekt ist bevorzugt von der zweidimensionalen Mannigfaltigkeit beabstandet, wobei der Abstand bevorzugt wenigstens mehrere Millimeter, besonders bevorzugt wenigstens mehrere Zentimeter aufweist. Es ist auch denkbar, dass das Eingabeobjekt einige Meter von der zweidimensionalen Mannigfaltigkeit entfernt ist. Die Entfernung des Eingabeobjekts von der zweidimensionalen Mannigfaltigkeit richtet sich bevorzugt nach der Anwendung, in der das Verfahren benutzt wird und nach der Größe des Bildschirms.

Somit lässt sich also eine Lupen-Funktion oder Spot-Funktion auf einem Bildschirm durch eine dreidimensionale Geste eines Eingabeobjekts, wie beispielsweise eines Fingers oder einer Hand, erzielen. Es ist somit eine besondere Gestensteuerung realisierbar. Mögliche Gesten für die Steuerung sind beispielsweise in der DE 10 2012 010 627 offenbart.

Erfindungsgemäß ist bei der Darstellung eines Markierungsobjekts und/oder eines Markierungsbereichs in der zweidimensionalen Mannigfaltigkeit zusätzlich zu den grafischen Daten wenigstens ein Strukturmerkmal des Markierungsobjekts und/oder des Markierungsbereichs von dem Eingabeobjekt abhängig. Bevorzugt ist wenigstens ein Strukturmerkmal von dem Abstand des Eingabeobjekts zu der zweidimensionalen Mannigfaltigkeit oder von dem Auftreffpunkt der Rückverfolgungslinie zwischen dem Eingabeobjekt und der zweidimensionalen Mannigfaltigkeit abhängig. Erfindungsgemäß hängt das Strukturmerkmal von den Eigenschaften des Eingabeobjekts ab, beispielsweise von dessen Größe oder Form. Bei einer Hand als Eingabeobjekt kann das Strukturmerkmal beispielsweise davon abhängen, ob die Hand eine Faust bildet oder als flache Hand geformt wird.

Als Strukturmerkmal wird dabei eines der folgenden Elemente bzw. Merkmale verstanden: Das Muster, die Farbe, die Form oder Größe des Markierungsobjekts oder des Markierungsbereichs. Weitere Strukturmerkmale sind die Transparenz oder andere strukturelle Merkmale, wie beispielsweise die Modulationsfrequenz, der Modulationsrhythmus und die Modulationsamplitude eines der vorgenannten Merkmale. Beispielsweise könnten einzelne Bildpunkte heller und dunkler aufleuchten und dies mit einer bestimmten Frequenz, einem vorgegebenen Rhythmus oder einer bestimmten Amplitude an Helligkeit. Dies bedeutet, dass die Änderungen und die Art der Änderung bzw. die Geschwindigkeit der Änderung einer der Merkmale wie Muster, Farbe, Größe, Form, Transparenz ebenfalls als Strukturmerkmal angesehen werden.

Neben den oben genannten Strukturmerkmalen können durch Änderungen der Position des Eingabeobjekts, seiner Form, Größe, Gestaltung, Transparenz, Reflektivität oder des Auftreffpunkts der Rückverfolgungskurve auf die zweidimensionale Mannigfaltigkeit von dem Eingabeobjekt Änderungen, wie beispielsweise Schärfe oder Auflösung des Markierungsbereichs, hervorrufen. Diese Änderungen des Markierungsbereichs können beispielsweise in Abhängigkeit davon erfolgen, ob die Änderung schneller oder langsamer als ein vorgegebener oder einstellbarer Schwellwert ist. Dieser Schwellwert kann beispielsweise mit anderen Schwellwerten übereinstimmen oder unterschiedlich zu ihnen sein. Dies kann beispielsweise angewandt werden, um Wischgesten von anderen Gesten zu Objektselektion zu unterscheiden. Objektselektionsgesten erfolgen dabei in der Regel deutlich langsamer als Wischgesten.

Es ist denkbar, dass die Änderung der Strukturmerkmale auch von weiteren Parametern abhängen kann. Beispielsweise ist es möglich, dass diese Abhängigkeit nur in bestimmten Zuständen des zu bedienenden Geräts, beispielsweise des Bildschirms oder der Recheneinheit, vorliegen kann. Auch ist es möglich, dass die Abhängigkeit der Änderung der Strukturmerkmale zeitlich beschränkt oder aber zeitlich verschieden sein kann. Die Abhängigkeit kann auch von den Eigenschaften oder dem Zustand des zu bedienenden Gerätes und/oder des Eingabeobjekts abhängig sein. Beispielsweise kann eine Annäherung des Eingabeobjekts an die zweidimensionale Mannigfaltigkeit im Falle der Einsatzbereitschaft oder Eingabebereitschaft eines Gerätes andere Änderungen des Markierungsbereichs oder des Markierungsobjekts hervorrufen als in einem Gerätezustand, in dem keine Eingabe erfolgen kann. Auch können Objekte sichtbar oder unsichtbar gemacht oder in ihrer Transparenz verändert werden. Natürlich ist auch eine Änderung der Struktur der Objekte oder ihres Aussehens möglich. Ein mögliches Anwendungsgebiet ist beispielsweise die Steuerung eines Bildschirms oder eines einen Bildschirm umfassenden Gerätes mit berührungslosen Gesten.

In einer besonderen Ausführungsform des erfindungsgemäßen Verfahrens können Änderungen der Markierungsfunktion, des Markierungsbereichs und/oder des Markierungsobjekts nicht nur von den Änderungen des Abstands des Eingabeobjekts zu der zweidimensionalen Mannigfaltigkeit, von Änderungen des Auftreffpunkts oder von Änderungen der Eigenschaften des Eingabeobjekts abhängen, sondern auch von der Art der Änderung dieser Eigenschaften bzw. des Abstands oder des Ortes des Auftreffpunkts.

Bevorzugt wird deshalb in einem weiteren Verfahrensschritt die Änderung des Abstands des Eingabeobjekts oder des Auftreffpunkts auf die zweidimensionale Mannigfaltigkeit zusätzlich der Eigenschaften des Eingabeobjekts, wie beispielsweise Größe oder Form, erkannt. Darüber hinaus wird bevorzugt von der Recheneinheit wenigstens die zeitliche erste Ableitung der Änderungen erfasst. Bevorzugt werden auch zeitlich höhere Ableitungen der Änderungen ermittelt, wenigstens bevorzugt jedoch die zweite zeitliche Ableitung, die Aufschluss über die Beschleunigung der Änderung gibt.

In einem weiteren Schritt werden die Markierungsfunktion, der Markierungsbereich und/oder das Markierungsobjekt in Abhängigkeit der absoluten Änderungen oder der zeitlichen ersten oder höheren Ableitungen dieser Änderungen verändert. Dabei können die Änderungen und/oder deren zeitliche Ableitungen mit einem Schwellwert verglichen werden. Dieser Schwellwert kann vorgegeben und/oder einstellbar sein. Die Änderung der Markierungsfunktion, des Markierungsbereichs oder des Markierungsobjekts erfolgen dann in Abhängigkeit des Schwellwerts, beispielsweise abhängig davon, ob der ermittelte Wert über oder unter einem vorgegebenen Schwellwert liegt.

In einer weiteren bevorzugten Ausgestaltung des erfindungsgemäßen Verfahrens erfolgt ebenfalls das Erkennen von Änderungen des Abstands des Eingabeobjekts zu der zweidimensionalen Mannigfaltigkeit, Änderungen des Auftreffpunktes, beispielsweise des Ortes des Auftreffpunktes oder der Rückverfolgungskurve zwischen Auftreffpunkt und Eingabeobjekt, oder von Änderungen der Eigenschaften des Eingabeobjekts. Diese Änderungen werden verglichen mit einem vorgegebenen oder einstellbaren zweiten Schwellwert. In Abhängigkeit der Änderungen relativ zu dem Schwellwert erfolgt dann bevorzugt eine Änderung des Zustands eines zu bedienenden Geräts, beispielsweise einer Recheneinheit oder einer Messvorrichtung oder einer anderen Einrichtung, die beispielsweise auch einen Bildschirm umfassen kann.

In einer bevorzugten Ausführungsform des Verfahrens verläuft die Rückverfolgungskurve zwischen Eingabeobjekt und Auftreffpunkt auf der zweidimensionalen Mannigfaltigkeit wenigstens teilweise auf einer Koordinatenlinie des Koordinatensystems. Das relevante Koordinatensystem ist hierbei das Koordinatensystem, in dessen Koordinatenebene die zweidimensionale Mannigfaltigkeit liegt. Bevorzugt liegt die Rückverfolgungskurve vollständig auf einer Koordinatenlinie. Besonders bevorzugt ist die Koordinatenlinie, auf der die Rückverfolgungskurve teilweise oder vollständig liegt, die Koordinatenlinie, die sich zum Eingabeobjekt erstreckt. Der Abstand zwischen Eingabeobjekt und zweidimensionaler Mannigfaltigkeit wird dann entlang einer Koordinatenlinie ermittelt. Es ist jedoch auch denkbar, den Abstand als kürzeste Entfernung zwischen Eingabeobjekt und zweidimensionaler Mannigfaltigkeit im Auftreffpunkt in Bezug auf das relevante Koordinatensystem zu bestimmen. Dies kann jedoch abhängig von der Komplexität des Koordinatensystems schwierig sein und deshalb einen höheren Rechenaufwand in der Recheneinheit erfordern, der jedoch durch leistungsfähigere Recheneinheiten kompensiert werden kann.

Neben dem erfindungsgemäßen Verfahren kann die gestellte Aufgabe auch durch eine erfindungsgemäße Vorrichtung zur Handhabung grafisch dargestellter Daten erfolgen. Die Vorrichtung umfasst typischerweise mindestens eine Recheneinheit zur Verarbeitung der Daten und bevorzugt gegebenenfalls zu ihrer Speicherung, bevorzugt jedenfalls gegebenenfalls zur zeitweisen Speicherung. Die Vorrichtung umfasst weiter mindestens einen Bildschirm, der eine zweidimensionale Mannigfaltigkeit repräsentiert, um die grafischen Daten darzustellen. Die Vorrichtung schließt mindestens eine Messvorrichtung zur Ermittlung und Erfassung eines Eingabeobjekts sowie dessen Position im Raum oder einer Änderung der Position des Eingabeobjekts oder eines Charakteristikums des jeweiligen Eingabeobjekts ein. Auch sind mehrere Eingabeobjekte wie beispielsweise zwei Finger etc. möglich. Derartige Gesten sind beispielsweise aus der DE102012025564A1 bekannt.

Die Vorrichtung ist dazu eingerichtet und ausgebildet, um grafische Daten zur Verfügung zu stellen, was bevorzugt mittels der Recheneinheit erfolgt. Die grafischen Daten werden mit einer ersten Auflösung auf der zweidimensionalen Mannigfaltigkeit eines dreidimensionalen Raumes mittels einer Abbildungsfunktion abgebildet, beispielsweise auf dem Bildschirm. Mittels der Messvorrichtung wird die räumliche Position des Eingabeobjekts im dreidimensionalen Raum erfasst und mithilfe eines dreidimensionalen Koordinatensystems und mittels der Recheneinheit quantifiziert. Das Koordinatensystem ist so festgelegt, dass die zweidimensionale Mannigfaltigkeit in einer der Koordinatenflächen bzw. Koordinatenebenen des dreidimensionalen Koordinatensystems liegt. Im kartesischen Koordinatensystem wäre dies folglich die X-Y-Ebene, bevorzugt die X-Y-Ebene im Koordinatenurspruch im Punkt Z gleich Null, also bei einer Z-Ausrichtung von Null.

Die Vorrichtung ist dazu ausgerichtet, den Abstand des Eingabeobjekts zu der zweidimensionalen Mannigfaltigkeit entlang einer Rückverfolgungskurve zwischen dem Eingabeobjekt und einem Auftreffpunkt auf die zweidimensionale Mannigfaltigkeit zu errechnen. Ein Markierungspunkt wird auf der zweidimensionalen Mannigfaltigkeit ermittelt. Er ist in einem vordefinierten Abstand von dem Auftreffpunkt angeordnet. Folglich verschiebt sich der Markierungspunkt mit dem Auftreffpunkt. Markierungspunkt und Auftreffpunkt können aufeinander fallen. Der Abstand zwischen Auftreffpunkt und Markierungspunkt kann einstellbar sein oder von dem Abstand des Eingabeobjekts zur zweidimensionalen Mannigfaltigkeit abhängen. Der Markierungspunkt wird auf den Bildschirm der Vorrichtung dargestellt und angezeigt. Der Markierungspunkt ist Teil eines Markierungsbereichs, beispielsweise einer Lupe oder eines Spots, oder eines Markierungsobjekts, wie beispielsweise eines Zeigers oder Cursors. Sowohl der Markierungspunkt als auch der Markierungsbereich oder das Markierungsobjekt können mittels einer Markierungsfunktion ermittelt werden. Dieses ist in der Regel eine Abbildungsfunktion, die bevorzugt wenigstens teilweise bijektiv ist.

In einer bevorzugten Ausführungsform der Vorrichtung ist der Bildschirm an wenigstens einer Stelle, die zum Anzeigen der grafischen Daten verwendet wird, gekrümmt. Bevorzugt hat der Bildschirm eine Pixelebene, die auch Farbgebungsschicht genannt wird, und eine Bildschirmoberfläche, die auch Bildschirmebene genannt wird. In einer weiter bevorzugten Ausführungsform ist die Pixelebene gekrümmt. Bevorzugt verläuft die Pixelebene in einem konstanten Abstand in Bezug auf das verwendete Koordinatensystem zu der Bildschirmoberfläche, so dass im Falle der Krümmung der Pixelebene auch die Oberfläche gekrümmt ist.

Bevorzugt weist die Messeinrichtung zur Ermittlung und Erfassung des Eingabeobjekts, dessen Position im Raum oder der Änderung der Position wenigstens einen Sensor auf. Mögliche Sensoren sind beispielsweise Photodioden und LEDs, Kameras, Sensoren, die empfindlich für elektromagnetische Strahlung sind und elektromagnetische Strahler, Ultraschallsensoren, kapazitive Sensoren oder induktive Sensoren. Insbesondere kapazitive und induktive Sensoren werden bei Berührungsgesten eingesetzt, während optische Sensoren, wie Photodiode und Kamera bevorzugt bei berührungslosen Messvorrichtungen zum Einsatz kommen, bei denen das Eingabeobjekt in einem Abstand von wenigstens einigen Millimetern oder einigen Zentimetern von der Bildschirmoberfläche beabstandet ist.

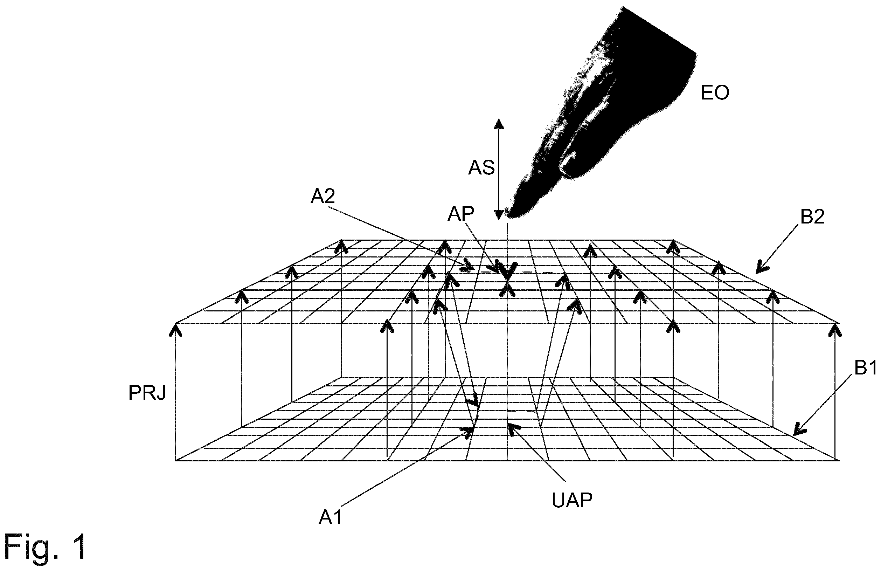

Im Folgenden wird beispielhaft die Erfindung unter Bezugnahme auf die beigefügte Abbildung (Figur 1) näher erläutert. Hierbei wird zur Vereinfachung und zum besseren Verständnis zum einen davon ausgegangen, dass mit dem erfindungsgemäßen Verfahren zunächst ein reales oder virtuelles Ur-Bild in einem zweidimensionalen kartesischen Koordinatensystem erzeugt wird, das in einem weiteren Schritt auf eine zweidimensionale Mannigfaltigkeit abgebildet wird. Zur Vereinfachung der Beschreibung wird im Folgenden weiter beispielhaft davon ausgegangen, dass auch der zweidimensionalen Mannigfaltigkeit ein kartesisches Koordinatensystem zugrunde liegt. Es sind jedoch ausdrücklich beliebig gekrümmte und auch nicht orthogonale Koordinatensysteme möglich und damit Teil dieser Offenbarung. Die zweidimensionale Mannigfaltigkeit liegt folglich in einer Koordinatenfläche, hier im Beispiel in der X-Y-Koordinatenebene.

In der hier dargestellten bevorzugten Ausführungsform der Erfindung wird zunächst ein erstes virtuelles Ur-Bild B1 erzeugt, in dem die grafisch dargestellten Daten dargestellt werden können. Dieses Ur-Bild B1 könnte auch als reales Bild erzeugt werden. Die grafischen Daten, die beispielsweise als Objekt auf einem Bildschirm abgebildet werden sollen, werden nun von ihrem virtuellen Ur-Bild B1 durch eine Abbildungsfunktion oder Abbildungsvorschrift, beispielsweise eine Projektion PRJ auf ein zweites Bild abgebildet. Das zweite Bild liegt hier als reales Bild vor. Dieses Verfahren ist bereits aus der Synchronisation verschiedener digitaler Videodatenströme bekannt und in der EP1142317B1 beschrieben. Es ist im Falle der vorliegenden Offenbarung die zweidimensionale Mannigfaltigkeit B2 eines dreidimensionalen Raumes, auf der die grafischen Daten mit einer ersten Auflösung abgebildet werden.

Es wird nochmals darauf hingewiesen, dass zur Vereinfachung alle Koordinaten orthogonal gezeichnet sind. Das Bild könnte aber selbstverständlich auch krummlinig, also beispielsweise sphärisch oder ellipsoid mit negativer und/oder positiver Krümmung sein. Andere gekrümmte oder willkürlich geformte zweidimensionale Mannigfaltigkeiten sind ebenfalls denkbar.

Ein Eingabeobjekt EO wird an die zweidimensionale Mannigfaltigkeit B2 angenähert und ist in einem vorgegebenen Abstand zu ihr positioniert. Die Annäherung des Eingabeobjekts, das beispielsweise eine Hand oder ein Finger sein kann, wie hier gezeigt, wird von einer nicht dargestellten Messeinrichtung oder Sensoreinheit erkannt und vermessen. Es kann sich bei dem Eingabeobjekt EO aber beispielsweise auch um eine elektronische Sensoreinheit handeln, die beispielsweise durch die Hand eines Bedieners gehalten, geführt und orientiert wird. Die Sensoreinheit kann dabei derart hinter der zweidimensionalen Mannigfaltigkeit angeordnet sein, dass die zweidimensionale Mannigfaltigkeit zwischen der Sensoreinheit und dem Eingabeobjekt angeordnet ist. Die Sensoreinheit bzw. die Sensoreinheiten können aber auch neben, vor oder auch innerhalb der zweidimensionalen Mannigfaltigkeit angeordnet sen. Ggf. kann bei einer Positionierung innerhalb der zweidimensionalen Mannigfaltigkeit die Pixelebene eine oder mehrere Öffnungen zur Aufnahme einer mehrerer Sensoreinheiten aufweisen. Die Messvorrichtung erfasst dabei die absolute Raumposition des Eingabeobjekts und berechnet den Abstand des Eingabeobjekts von der zweidimensionalen Mannigfaltigkeit, zum Beispiel von der Oberfläche eines Bildschirms.

In einem nächsten Schritt wird der Auftreffpunkt einer Rückverfolgungskurve zwischen dem Eingabeobjekt (Finger) und der zweidimensionalen Mannigfaltigkeit ermittelt.

In dem hier beschriebenen Beispiel sind der Markierungspunkt gemäß der Erfindung und der Auftreffpunkt identisch. Ihr Abstand ist folglich Null. Um den Markierungspunkt herum ist die zweidimensionale Mannigfaltigkeit jedenfalls teilweise nicht linear gegenüber einem korrespondierenden Bereich A1 im Ur-Bild B1 verzerrt. Der korrespondierende Bereich A1 des Ur-Bildes B1 wird um den Auftreffpunkt AP bzw. Markierungspunkt durch eine Markierungsfunktion und/oder die Abbildungsfunktion beispielsweise vergrößert. Hierdurch erfolgt eine nichtlineare Abbildung auf den projizierenden Bereich A2, der der Markierungsbereich A2 um den Markierungspunkt herum ist.

Eine Teilabbildung (Teilbereich) im Markierungsbereich A2 ist in dem hier gezeigten Beispiel sogar lokal linear. Es erfolgt dort eine lineare Vergrößerung eines Teils des Ur-Bereichs A1 auf einem Teil des Markierungsbereichs A2. Allerdings sind dabei einige Punkte des Ur-Bildes B1 nicht mehr auf der zweidimensionalen Mannigfaltigkeit B2 abbildbar oder werden gegebenenfalls in der Auflösung komprimiert, was einer nichtlinearen Verzerrung entspricht. Die Abbildungsfunktion der grafischen Daten auf die zweidimensionale Mannigfaltigkeit ist somit folglich also insgesamt nichtlinear.

Zur Bestimmung des Eingabeobjekts EO und des Auftreffpunktes AP auf der zweidimensionalen Mannigfaltigkeit B2 wird der Abstand des Eingabeobjekts EO entlang einer Rückverfolgungskurve ermittelt. In dem hier gezeigten Beispiel ist die Rückverfolgungskurve eine Gerade im kartesischen Koordinatensystem. Zur einfachen Veranschaulichung wird also der Auftreffpunkt AP entlang einer Koordinatenlinie des Koordinatensystems der zweidimensionalen Mannigfaltigkeit B2 ermittelt. Diese wird als Eingabeobjektkoordinatenlinie bezeichnet.

Es ist vorteilhaft, wenn in dem Auftreffpunkt AP der Rückverfolgungskurve auf die zweidimensionale Mannigfaltigkeit die Abbildungsfunktion eineindeutig und bijektiv ist. Somit kann zu dem Auftreffpunkt AP auf der zweidimensionalen Mannigfaltigkeit ein entsprechender Ur-Auftreffpunkt UAP im virtuellen Ur-Bild B1 berechnet werden. Dies erfolgt durch eine Umkehrabbildung zu der Abbildungsfunktion. Auf diese Weise kann das auf dem Ur-Bild B1 virtuell dargestellte Datenobjekt ermittelt werden und entsprechend den Steueranweisungen, die durch die Gestensteuerung und die Bewegung des Eingabeobjekts EO, z. B. der Hand, hervorgerufen werden, an eine in der Recheneinheit hinterlegte Software weitergegeben werden. Die Software entscheidet in Abhängigkeit von dem Ur-Auftreffpunkt UAP und gegebenenfalls weiteren Bedingungen im Ablauf der Software, welche Beeinflussungen hervorgerufen werden. Beispielsweise kann das Verhalten von Vorrichtungen oder der Zustand von Vorrichtungen verändert werden. Es ist auch möglich, wie hier gezeigt, dass ein in dem Markierungsbereich A2 angeordnetes Objekt vergrößert dargestellt wird und dann entsprechend eines ebenfalls in dem Markierungsbereich A2 befindlichen Objektes markiert und ausgewählt werden kann.

Gleichzeitig wird die neue Position eines Ur-Bereichs A1 im virtuellen Ur-Bild B1 und eines projizierten Markierungsbereichs A2 in der zweidimensionalen Mannigfaltigkeit festgelegt. Dabei wird bevorzugt mindestens ein Parameter der nichtlinearen Projektion bzw. Abbildungsfunktion durch einen Parameter der räumlichen Lage des Eingabeobjekts EO oder beispielsweise dessen Ausrichtung bestimmt. Beispielsweise kann das Maß der Vergrößerung vom Abstand AS des Eingabeobjekts EO zur zweidimensionalen Mannigfaltigkeit B2 abhängen oder auch vom Ort des Ur-Bildbereichs A1 und des projizierten Markierungsbereichs A2 im jeweiligen Ur-Bild B1 bzw. projizierten Bild B2 (zweidimensionale Mannigfaltigkeit) oder vom gemessenen Auftreffpunkt AP auf die zweidimensionale Mannigfaltigkeit B2 abhängen.

In einer bevorzugten Ausführungsform umfasst das Verfahren folglich die weiteren Schritte des Bestimmens eines Ur-Auftreffpunkts UAP auf einem virtuellen oder reellen Ur-Bild B1 aus dem Auftreffpunkt AP des Eingabeobjekts EO auf der zweidimensionalen Mannigfaltigkeit B2. Dies erfolgt mittels einer inversen Abbildungsfunktion. Voraussetzung ist hier, dass die Abbildungsfunktion selbst wenigstens teilweise bijektiv und eineindeutig ist.

In einem weiteren Schritt wird bevorzugt bestimmt, welche grafischen Daten in dem Ur-Auftreffpunkt UAP übereinstimmen bzw. korrelieren, beispielsweise wenn die grafischen Daten als Vektordaten vorhanden sind. In einem weiteren Schritt erfolgt dann das Auswählen der grafischen Daten und optional eines grafischen Objekts, das die grafischen Daten umfasst. Auf diese Weise lässt sich darauf zurückschließen, welches grafische Objekt oder welche grafischen Daten beispielsweise durch eine vorgegebene Geste ausgewählt wurden. Die hierbei in Betracht kommenden Gesten können nahezu beliebig sein. Eine Reihe von Gesten, die für dieses Verfahren geeignet sind, sind beispielsweise in der DE 10 2012 010 627 beschrieben.

Es wird an dieser Stelle nochmals darauf hingewiesen, dass eine lupenartige Vergrößerungsfunktion des Markierungsbereichs A2 innerhalb der zweidimensionalen Mannigfaltigkeit zu einem Verlust der Bijektivität führen kann. Dann ist von dem Markierungspunkt AP in der zweidimensionalen Mannigfaltigkeit B2 nicht mehr auf den entsprechenden Ur-Bildpunkt in einem kartesischen Koordinatensystem des Ur-Bildes B1 und damit auf das zugehörige virtuelle im Ur-Bild dargestellte grafische Objekt zurückrechenbar. Es kann also nicht mehr auf die grafischen Daten zurückgeschlossen werden. Daher ist es notwendig, dass Regeln zur Selektion des darzustellenden Bildpunktes im Markierungsbereich A2 der zweidimensionalen Mannigfaltigkeit B2 diese Bijektivität lokal für den Bildpunkt (Markierungspunkt) herstellt. Die Regel zur Selektion des Markierungspunktes muss also zumindest lokal invertierbar sein. Für jeden Bildpunkt auf der zweidimensionalen Mannigfaltigkeit (beispielsweise eines Bildschirms) muss also zumindest lokal eine Umkehrfunktion zu der Abbildungsfunktion existieren, so dass die Abbildungsfunktion zumindest für diesen Bildpunkt lokal umkehrbar ist und auf den Ur-Bildpunkt bzw. die grafisch dargestellten Daten zurückgeschlossen werden kann.

Somit lässt sich beispielsweise von einem Bildpunkt, beispielsweise einem Referenzpunkt, der Teil der Bildpunkte der zweidimensionalen Mannigfaltigkeit ist, auf den zugehörigen Ur-Bildpunkt bzw. Ur-Referenzpunkt in dem Ur-Bild, das bevorzugt ein kartesisches Koordinatensystem umfasst, und auf das dort (jedenfalls virtuell) dargestellte grafische Objekt rückschließen. Dieser Referenzpunkt könnte beispielsweise auch der Markierungspunkt oder ein Teil des Markierungsobjektes sein.

Da der Markierungspunkt und der Auftreffpunkt nicht identisch sein müssen, wird zwischen ihnen bevorzugt ein Verschiebungsvektor der Länge 1 berechnet, der vor der Verschiebung mit seinem Anfang im Auftreffpunkt platziert wird und aus seiner standardmäßigen Ausgangslage durch Drehung um einen vorgegebenen Winkel ausgerichtet werden kann. Der Verschiebungsvektor zeigt dann in eine Richtung innerhalb der zweidimensionalen Mannigfaltigkeit. Wird der Verschiebungsvektor der Länge 1 nun mit einem vorgegebenen Wert multipliziert, so liegt dessen Ende auf einer Bahn, die lokal stets geradlinig, genau genommen ein Geodät, ist. Das Ende des so ausgerichteten und verlängerten Verschiebungsvektors ist dann der Markierungspunkt. Dies ist nur ein Beispiel von mehreren Möglichkeiten, wie der Markierungspunkt innerhalb der zweidimensionalen Mannigfaltigkeit berechnet werden kann. Für den Fall, dass der Markierungspunkt außerhalb der zweidimensionalen Mannigfaltigkeit, also außerhalb des Bildschirms zu liegen kommt, ist bevorzugt eine Sonderregelung vorzunehmen. Beispielsweise kann es sinnvoll sein, den Verschiebungsvektor maximal bis zum Rand der Mannigfaltigkeit bzw. des Bildschirms zu verlängern. Allerdings lässt sich die Länge und Ausrichtung des Verschiebungsvektors auch in Abhängigkeit von der Position des Eingabeobjekts, oder einer bestimmten Geste, hervorgerufen durch das Eingabeobjekt, beeinflussen und verändern.

## Patentansprüche

1. Verfahren zur Handhabung grafisch dargestellter Daten, wobei grafische Daten in einer Recheneinheit bereits vorhanden sind, erzeugt werden und/oder als Vektoren vorliegen,
umfassend die folgenden Schritte:
- Abbilden der grafischen Daten mit einer ersten Auflösung auf einer zweidimensionalen Mannigfaltigkeit (B2) eines dreidimensionalen Raumes mittels einer Abbildungsfunktion (PRJ);
- Erfassen eines Eingabeobjekts (EO), nämlich einer Eigenschaft dieses Eingabeobjekts (EO), wie Form oder Größe, und der räumlichen Position dieses Eingabeobjekts (EO) im dreidimensionalen Raum mittels einer Messvorrichtung;
- Verarbeiten der ermittelten Daten mittels der Recheneinheit;
- Quantifizieren der Position und/oder Orientierung dieses Eingabeobjektes (EO) mithilfe eines dreidimensionalen Koordinatensystems, das so gewählt ist, dass die zweidimensionale Mannigfaltigkeit (B2) in einer der Koordinatenflächen des dreidimensionalen Koordinatensystems liegt;
- Ermitteln einer dreidimensionalen Geste dieses Eingabeobjekts (EO) durch Ermitteln des Abstands (AS) dieses Eingabeobjekts (EO) von der zweidimensionalen Mannigfaltigkeit (B2) entlang einer Rückverfolgungskurve zwischen diesem Eingabeobjekt (EO) und einem Auftreffpunkt (AP) der Rückverfolgungskurve auf die zweidimensionale Mannigfaltigkeit (B2);
- Ermitteln eines Markierungspunkts auf der zweidimensionalen Mannigfaltigkeit (B2) in einem vordefinierten Abstand von dem Auftreffpunkt (AP);
- Anzeigen des Markierungspunkts auf der zweidimensionalen Mannigfaltigkeit,
wobei der Markierungspunkt Teil eines Markierungsbereichs (A2) oder eines Markierungsobjekts ist,
wobei der Markierungspunkt und/oder der Markierungsbereich (A2) und/oder das Markierungsobjekt mittels einer Markierungsfunktion ermittelt wird, und
wobei
- bei der Darstellung des Markierungsobjekts und/oder des Markierungsbereichs (A2) in der zweidimensionalen Mannigfaltigkeit (B2) zusätzlich zu den grafischen Daten wenigstens ein Strukturmerkmal des Markierungsobjekts und/oder des Markierungsbereichs (A2) von Eigenschaften dieses Eingabeobjekts (EO) abhängen,
- wobei eine Änderung der Form, Größe, Transparenz oder Reflektivität dieses Eingabeobjekts (EO) eine Änderung des Strukturmerkmals des Markierungsobjekts und/oder des Markierungsbereichs (A2) hervorruft,
- wobei das Strukturmerkmal des Markierungsobjekts und/oder des Markierungsbereichs (A2) aus einem Element der folgenden Gruppe besteht:
Muster, Größe, Farbe, Form, Transparenz, sowie deren Modulationsfrequenz, Modulationsrhythmus oder Modulationsamplitude.

2. Verfahren nach Anspruch 1, **gekennzeichnet durch** die folgenden Schritte:
- Festlegen und Darstellen des Markierungsbereichs (A2) zusätzlich zu den grafischen Daten auf der zweidimensionalen Mannigfaltigkeit (B2), bevorzugt um den Markierungspunkt herum, wobei die Festlegung des Markierungsbereichs (A2) mittels der Markierungsfunktion erfolgt;
und/oder
- Festlegen und Darstellen des Markierungsobjekts zusätzlich zu den grafischen Daten auf der zweidimensionalen Mannigfaltigkeit (B2);
wobei
- bevorzugt das Ergebnis der Markierungsfunktion von dem Markierungsobjekt und/oder dem Markierungsbereich (A2) repräsentiert wird;
und
- optionales Verändern des Markierungsbereichs (A2) oder des Markierungsobjekts innerhalb der zweidimensionalen Mannigfaltigkeit (B2), bevorzugt mittels der Markierungsfunktion.

3. Verfahren nach einem der vorhergehenden Ansprüche, **dadurch gekennzeichnet, dass** der Abstand zwischen dem Auftreffpunkt (AP) und dem Markierungspunkt konstant oder gleich Null ist.

4. Verfahren nach einem der vorhergehenden Ansprüche, **dadurch gekennzeichnet, dass** die Abbildungsfunktion (PRJ) wenigstens in dem Markierungspunkt und/oder in dem Auftreffpunkt (AP) bijektiv ist.

5. Verfahren nach einem der vorhergehenden Ansprüche, **dadurch gekennzeichnet, dass** das Ergebnis der Markierungsfunktion zumindest zeitweise von den Koordinaten des Auftreffpunktes (AP) und/oder den Koordinaten des Markierungspunkts und/oder dem Abstand zwischen Auftreffpunkt (AP) und Markierungspunkt abhängt.

6. Verfahren nach einem der vorhergehenden Ansprüche, **dadurch gekennzeichnet, dass** die zweidimensionale Mannigfaltigkeit (B2) in wenigstens einem Punkt gekrümmt ist.

7. Verfahren nach einem der vorhergehenden Ansprüche, **dadurch gekennzeichnet, dass** die Darstellung der grafischen Daten in dem Markierungsbereich (A2) mit einer zweiten Auflösung erfolgt, wobei die zweite Auflösung bevorzugt von der ersten Auflösung verschieden ist.

8. Verfahren nach einem der vorhergehenden Ansprüche, **dadurch gekennzeichnet, dass**
die Markierungsfunktion eine lineare oder nichtlineare Abbildung umfasst, durch die mindestens einer der folgenden Bildpunktparameter im Markierungsbereich (A2) verändert wird, wobei die Bildpunktparameter wenigstens die Helligkeit eines Bildpunkts, den Kontrast, die Farbe, die Auflösung, die Vergrößerung oder die Farbsättigung einschließen, und
wobei bevorzugt die Markierungsfunktion bezüglich wenigstens einem der Bildpunktparameter nichtlinear ist.

9. Verfahren nach einem der vorhergehenden Ansprüche, **gekennzeichnet durch** die folgenden Schritte:
- Erkennen von Änderungen des Abstands (AS) des Eingabeobjekts (EO) zu der zweidimensionalen Mannigfaltigkeit (B2), von Änderungen des Auftreffpunkts (AP) oder von Änderungen der Eigenschaften des Eingabeobjekts (EO), insbesondere der Größe oder Form,
- Ermitteln der zeitlichen ersten oder höheren Ableitung der Änderung des Abstands (AS), des Auftreffpunkts (AP) oder der Eigenschaften des Eingabeobjekts (EO);
- Ändern der Markierungsfunktion und/oder des Markierungsbereichs (A2) und/oder des Markierungsobjekts in Abhängigkeit der Änderung des Abstands (AS), des Auftreffpunkts (AP) oder der Eigenschaften des Eingabeobjekts (EO) und/oder der zeitlichen ersten oder höheren Ableitungen dieser Änderungen,
- wobei bevorzugt die Änderung des Abstands (AS), des Auftreffpunkts (AP) oder der Eigenschaften des Eingabeobjekts (EO) und/oder der zeitlichen ersten oder höheren Ableitungen dieser Änderungen mit einem vorgegebenen oder einstellbaren Schwellwert verglichen wird und die Änderung der Markierungsfunktion und/oder des Markierungsbereichs (A2) und/oder des Markierungsobjekts in Abhängigkeit mit dem Schwellwert erfolgt.

10. Verfahren nach einem der vorhergehenden Ansprüche, **gekennzeichnet durch** die folgenden Schritte:
- Erkennen von Änderungen des Abstands (AS) des Eingabeobjekts (EO) zu der zweidimensionalen Mannigfaltigkeit (B2), von Änderungen des Auftreffpunkts (AP) oder von Änderungen der Eigenschaften des Eingabeobjekts (EO), insbesondere der Größe oder Form,
- Vergleichen der Änderungen mit einem vorgegebenen oder einstellbaren Schwellwert und
- Ändern des Zustands eines bedienbaren Gerätes in Abhängigkeit des Vergleichs mit dem Schwellwert.

11. Verfahren nach einem der vorhergehenden Ansprüche, **gekennzeichnet durch** die folgenden Schritte:
- Bestimmen eines Ur-Auftreffpunktes (UAP) auf einem virtuellen oder reellen Ur-Bild (B1) aus dem Auftreffpunkt (AP) des Eingabeobjekts (EO) auf der zweidimensionalen Mannigfaltigkeit (B2) mittels einer inversen Abbildungsfunktion,
- Bestimmen, welche grafische Daten mit dem Ur-Auftreffpunkt (UAP) übereinstimmen oder korrelieren, und
- Auswählen der grafischen Daten und optional eines grafischen Objekts, das die grafischen Daten umfasst.

12. Verfahren nach einem der vorhergehenden Ansprüche, **dadurch gekennzeichnet, dass**
- die Rückverfolgungskurve wenigstens teilweise auf einer Koordinatenlinie des Koordinatensystems liegt, bevorzugt vollständig auf einer Koordinatenlinie liegt, besonders bevorzugt sich die Koordinatenlinie zu dem Eingabeobjekt (EO) erstreckt.

13. Vorrichtung zur Handhabung grafisch dargestellter Daten umfassend
- eine Recheneinheit zur Verarbeitung der Daten,
- einen Bildschirm, der eine zweidimensionale Mannigfaltigkeit (B2) repräsentiert, zur Darstellung grafischer Daten,
- eine Messvorrichtung zur Ermittlung und Erfassung eines Eingabeobjekts (EO), dessen Position im Raum oder einer Änderung der Position, wobei die Messeinrichtung einen Sensor umfasst, der zu einer Gruppe von optischen Sensoren aus Fotodiode, LED, Kamera oder Ultraschallsensor gehört,
wobei die Vorrichtung dazu ausgebildet und eingerichtet ist, um
- die grafischen Daten zur Verfügung zu stellen,
- die grafischen Daten mit einer ersten Auflösung auf der zweidimensionalen Mannigfaltigkeit (B2) eines dreidimensionalen Raumes mittels einer Abbildungsfunktion (PRJ) auf dem Bildschirm abzubilden,
- mittels der Messvorrichtung ein Eingabeobjekt (EO), nämlich eine Eigenschaft des Eingabeobjekts (EO), wie Form oder Größe, und die räumliche Position des Eingabeobjekts (EO) im dreidimensionalen Raum zu erfassen,
- die Position des Eingabeobjektes (EO) mithilfe eines dreidimensionalen Koordinatensystems, das so festgelegt ist, dass die zweidimensionale Mannigfaltigkeit (B2) in einer der Koordinatenflächen des dreidimensionalen Koordinatensystems liegt, und mittels der Recheneinheit zu quantifizieren,
- eine dreidimensionale Geste dieses Eingabeobjekts (EO) durch Ermitteln des Abstands (AS) dieses Eingabeobjekts (EO) von der zweidimensionalen Mannigfaltigkeit (B2) entlang einer Rückverfolgungskurve zwischen dem Eingabeobjekt (EO) und einem Auftreffpunkt (AP) der Rückverfolgungskurve auf die zweidimensionale Mannigfaltigkeit (B2) zu ermitteln,
- einen Markierungspunkt auf der zweidimensionalen Mannigfaltigkeit (B2) in einem vordefinierten Abstand von dem Auftreffpunkt (AP) zu ermitteln;
- den Markierungspunkt auf der zweidimensionalen Mannigfaltigkeit (B2) auf dem Bildschirm anzuzeigen,
- wobei der Markierungspunkt Teil eines Markierungsbereichs (A2) oder eines Markierungsobjekts ist und wobei der Markierungspunkt und/oder der Markierungsbereich (A2) und/oder das Markierungsobjekt mittels einer Markierungsfunktion ermittelt wird, und
- bei der Darstellung des Markierungsobjekts und/oder des Markierungsbereichs (A2) in der zweidimensionalen Mannigfaltigkeit (B2) zusätzlich zu den grafischen Daten wenigstens eine Änderung eines Strukturmerkmals des Markierungsobjekts und/oder des Markierungsbereichs (A2) von einer Änderung der Form, Größe, Transparenz oder Reflektivität des Eingabeobjekts (EO) abhängen, wobei das Strukturmerkmal des Markierungsobjekts und/oder des Markierungsbereichs (A2) aus einem Element der folgenden Gruppe besteht:
Muster, Größe, Farbe, Form, Transparenz, sowie deren Modulationsfrequenz, Modulationsrhythmus oder Modulationsamplitude.

14. Vorrichtung nach dem vorhergehenden Anspruch, **dadurch gekennzeichnet, dass** der Bildschirm an wenigstens einer Stelle, die zur Anzeige der grafischen Daten verwendet wird, gekrümmt ist, wobei bevorzugt der Bildschirm eine Pixelebene und eine Bildschirmoberfläche aufweist und bevorzugt die Pixelebene gekrümmt ist und besonders bevorzugt die Pixelebene in einem konstanten Abstand in dem Koordinatensystem zu der Bildschirmoberfläche verläuft.

## Claims

1. Method for handling graphically represented data, wherein graphical data are already available in a processing unit, are generated and/or are available as vectors,
comprising the following steps:
- representing the graphical data with a first resolution on a two-dimensional manifold (B2) of a three-dimensional space by means of a representation function (PRJ);
- capturing an input object (EO), namely a property of this input object (EO) like shape or size, and the spatial position of this input object (EO) in the three-dimensional space by means of a measurement apparatus;
- processing the determined data by means of the processing unit;
- quantifying the position and/or orientation of this input object (EO) by means of a three-dimensional coordinate system, which is chosen so that the two-dimensional manifold (B2) lies in one of the coordinate planes of the three-dimensional coordinate system;
- determining a three-dimensional gesture of this input object (EO) by determining the distance (AS) of this input object (EO) from the two-dimensional manifold (B2) along a backtracking curve between this input object (EO) and an intersection point (AP) of the backtracking curve on the two-dimensional manifold (B2);
- determining a marking point on the two-dimensional manifold (B2) in a predefined distance from the intersection point (AP);
- displaying the marking point on the two-dimensional manifold,
wherein the marking point forms part of a marking area (A2) or a marking object,
wherein the marking point and/or the marking area (A2) and/or the marking object are determined by means of a marking function; and
wherein
- in the representation of the marking object and/or the marking area (A2) in the two-dimensional manifold (B2) in addition to the graphical data at least one structural feature of the marking object and/or the marking area (A2) depends on properties of this input object (EO),
- wherein a change of the shape, size, transparency or reflectivity of this input object (EO) causes a change of the structural features of the marking object and/or of the marking area (A2),
- wherein the structural feature of the marking object and/or the marking area (A2) consists of an element of the following group: pattern, size, color, shape, transparency, and their modulation frequency, modulation rhythm or modulation amplitude.

2. The method of claim 1, **characterized by** the following steps:
- defining and representing the marking area (A2) in addition to the graphical data on the two-dimensional manifold (B2), preferably around the marking point, wherein the definition of the marking area (A2) is effected by means of the marking function; and/or
- defining and representing the marking object in addition to the graphical data on the two-dimensional manifold (B2);
wherein
- preferably the result of the marking function is represented by the marking object and/or the marking area (A2); and
- optionally changing the marking area (A2) or the marking object within the two-dimensional manifold (B2), preferably by means of the marking function.

3. Method according to any one of the preceding claims, **characterized in that** the distance between the intersection point (AP) and the marking point is constant or equals zero.

4. Method according to any one of the preceding claims, **characterized in that** the representation function (PRJ) is bijective at least in the marking point and/or in the intersection point (AP).

5. Method according to any one of the preceding claims, **characterized in that** the result of the marking function at least temporarily depends on the coordinates of the intersection point (AP) and/or the coordinates of the marking point and/or the distance between intersection point (AP) and marking point.

6. Method according to any one of the preceding claims, **characterized in that** the two-dimensional manifold (B2) is curved in at least one point.

7. Method according to any one of the preceding claims, **characterized in that** the representation of the graphical data in the marking area (A2) is effected with a second resolution, wherein the second resolution is preferably different from the first resolution.

8. Method according to any one of the preceding claims, **characterized in that**
the marking function comprises a linear or nonlinear mapping, by which at least one of following image point parameters in the marking area (A2) is changed, wherein the image point parameters include at least the brightness of an image point, the contrast, the color, the resolution, the enlargement or the color saturation, and
wherein preferably the marking function is nonlinear with respect to at least one of the image point parameters.

9. Method according to any one of the preceding claims, **characterized by** the following steps:
- recognizing changes in the distance (AS) of the input object (EO) to the two-dimensional manifold (B2), changes of the intersection point (AP) or changes of the properties of the input object (EO), in particular the size and the shape;
- determining the temporal first or higher derivative of the change of the distance (AS), of the intersection point (AP) or the properties of the input object (EO);
- changing the marking function and/or the marking area (A2) and/or the marking object depending on the change of the distance (AS), the intersection point (AP) or the properties of the input object (EO) and/or the temporal first or higher derivatives of these changes,
- wherein preferably the change of the distance (AS), of the intersection point (AP) or the properties of the input object (EO) and/or the temporal first or higher derivatives of these changes is compared to a predefined threshold and the change of the marking function and/or of the marking area (A2) and/or of the marking object is effected depending on the threshold.

10. Method according to any one of the preceding claims, **characterized by** the following steps:
- recognizing changes in the distance (AS) of the input object (EO) to the two-dimensional manifold (B2), changes of the intersection point (AP) or changes of the properties of the input object (EO), in particular the size or shape;
- comparing the changes to a predefined or adjustable threshold; and
- changing the state of an operable apparatus depending on the comparison to the threshold.

11. Method according to any one of the preceding claims, **characterized by** the following steps:
- determining an original intersection point (UAP) on a virtual or real original image (B1) from the intersection point (AP) of the input object (EO) on the two-dimensional manifold (B2) by means of an inverse representation function,
- determining which graphical data correspond or correlate with the original intersection point (UAP), and
- selecting the graphical data and optionally a graphical object including the graphical data.

12. Method according to any one of the preceding claims, **characterized in that**
- the backtracking curve lies at least partially on a coordinate line of the coordinate system, preferably completely on a coordinate line, in particular preferably the coordinate line extending to the input object (EO).

13. Apparatus for handling graphically represented data, comprising
- a processing unit for processing the data;
- a display representing a two-dimensional manifold (B2) for representing graphical data;
- a measurement apparatus for determining and capturing an input object (EO), its position in space or a change of the position, wherein the measurement apparatus comprises a sensor, forming part of a group of optical sensors including photodiode, LED, camera or an ultrasonic sensor,
wherein the apparatus is configured and arranged for
- providing the graphical data;
- representing the graphical data on the display with a first resolution on the two-dimensional manifold (B2) of a three-dimensional space by means of a representation function (PRJ);
- capturing, by means of the measurement apparatus, an input object (EO), namely a property of the input object (EO) like shape or size, and the spatial position of the input object (EO) in the three-dimensional space;
- quantifying the position of the input object (EO) by means of a three-dimensional coordinate system, which is defined so that the two-dimensional manifold (B2) lies in one of the coordinate planes of the three-dimensional coordinate system, and by means of the processing unit;
- determining a three-dimensional gesture of this input object (EO) by determining the distance (AS) of the input object (EO) from the two-dimensional manifold (B2) along a backtracking curve between the input object (EO) and an intersection point (AP) of the backtracking curve on the two-dimensional manifold (B2);
- determining a marking point on the two-dimensional manifold (B2) in a predefined distance from the intersection point (AP);
- displaying the marking point on the two-dimensional manifold (B2) on the display,
- wherein the marking point forms part of a marking area (A2) or a marking object and wherein the marking point and/or the marking area (A2) and/or the marking object are determined by means of a marking function; and
- in the representation of the marking object and/or of the marking area (A2) in the two-dimensional manifold (B2) in addition to the graphical data at least one change of a structural feature of the marking object and/or the marking area (A2) depends on a change of the shape, size, transparency or reflectivity of the input object (EO),
wherein the structural feature of the marking object and/or of the marking area (A2) consists of an element of the following group: pattern, size, color, shape, transparency and their modulation frequency, modulation rhythm or modulation amplitude.

14. Apparatus according to the preceding claim, **characterized in that** the display is curved in at least one position that is used for displaying the graphical data, wherein preferably the display includes a pixel plane and a display surface and the pixel plane is preferably curved, in particular preferably the pixel plane extends in a constant distance to the display surface in the coordinate system.

## Revendications

1. Procédé destiné à la manipulation de données représentées graphiquement, dans lequel des données graphiques sont déjà présentes dans une unité de calcul, sont générées et/ou sont présentes en tant que vecteurs, comprenant les étapes suivantes :
- représentation des données graphiques avec une première résolution sur une variété bidimensionnelle (B2) d'un espace tridimensionnel au moyen d'une fonction de représentation (PRJ) ;
- acquisition d'un objet d'entrée (EO), à savoir une propriété de cet objet d'entrée (EO), comme la forme ou la taille, et de la position dans l'espace de cet objet d'entrée (EO) dans l'espace tridimensionnel au moyen d'un dispositif de mesure ;
- traitement des données déterminées au moyen de l'unité de calcul ;
- quantification de la position et/ou de l'orientation de cet objet d'entrée (EO) à l'aide d'un système de coordonnées tridimensionnel qui est choisi de sorte que la variété bidimensionnelle (B2) se trouve dans une des surfaces de coordonnées du système de coordonnées tridimensionnel ; détermination d'un geste tridimensionnel de cet objet d'entrée (EO) par le biais de la détermination de la distance (AS) de cet objet d'entrée (EO) par rapport à la variété bidimensionnelle (B2) le long d'une courbe de traçage entre cet objet d'entrée (EO) et un point d'impact (AP) de la courbe de traçage sur la variété bidimensionnelle (B2) ;
- détermination d'un point de marquage sur la variété bidimensionnelle (B2) à une distance prédéfinie par rapport au point d'impact (AP) ;
- affichage du point de marquage sur la variété bidimensionnelle,
dans lequel le point de marquage fait partie d'une zone de marquage (A2) ou d'un objet de marquage,
dans lequel le point de marquage et/ou la zone de marquage (A2) et/ou l'objet de marquage sont déterminés au moyen d'une fonction de marquage, et dans lequel
- lors de la représentation de l'objet de marquage et/ou de la zone de marquage (A2) dans la variété bidimensionnelle (B2) en plus des données graphiques au moins une caractéristique de structure de l'objet de marquage et/ou de la zone de marquage (A2) dépend des propriétés de cet objet d'entrée (EO),
- dans lequel une modification de la forme, de la taille, de la transparence ou de la réflectivité de cet objet d'entrée (EO) a pour conséquence une modification de la caractéristique de structure de l'objet de marquage et/ou de la zone de marquage (A2),
- dans lequel la caractéristique de structure de l'objet de marquage et/ou de la zone de marquage (A2) se compose d'un élément du groupe suivant : modèle, taille, couleur, forme, transparence, ainsi que sa fréquence de modulation, son rythme de modulation ou son amplitude de modulation.

2. Procédé selon la revendication 1, **caractérisé par** les étapes suivantes :
- définition et représentation de la zone de marquage (A2) en plus des données graphiques sur la variété bidimensionnelle (B2), de préférence autour du point de marquage, dans lequel la définition de la zone de marquage (A2) est effectuée au moyen de la fonction de marquage ;
et/ou
- définition et représentation de l'objet de marquage en plus des données graphiques sur la variété bidimensionnelle (B2) ;
dans lequel
- de préférence le résultat de la fonction de marquage est représenté par l'objet de marquage et/ou la zone de marquage (A2) ;
et
- modification facultative de la zone de marquage (A2) ou de l'objet de marquage au sein de la variété bidimensionnelle (B2), de préférence au moyen de la fonction de marquage.

3. Procédé selon l'une des revendications précédentes, **caractérisé en ce que** la distance entre le point d'impact (AP) et le point de marquage est constante ou égale à zéro.

4. Procédé selon l'une des revendications précédentes, **caractérisé en ce que** la fonction de représentation (PRJ) est bijective au moins dans le point de marquage et/ou dans le point d'impact (AP).

5. Procédé selon l'une des revendications précédentes, **caractérisé en ce que** le résultat de la fonction de marquage dépend au moins en partie des coordonnées du point d'impact (AP) et/ou des coordonnées du point de marquage et/ou de la distance entre le point d'impact (AP) et le point de marquage.

6. Procédé selon l'une des revendications précédentes, **caractérisé en ce que** la variété bidimensionnelle (B2) est courbée dans au moins un point.

7. Procédé selon l'une des revendications précédentes, **caractérisé en ce que** la représentation des données graphiques dans la zone de marquage (A2) est effectuée avec une deuxième résolution, dans lequel la deuxième résolution est de préférence différente de la première résolution.

8. Procédé selon l'une des revendications précédentes, **caractérisé en ce que** la fonction de marquage comprend une représentation linéaire ou non linéaire, par le biais de laquelle au moins l'un des paramètres de points d'image suivants est modifié dans la zone de marquage (A2), dans lequel les paramètres de points d'image incluent au moins la clarté d'un point d'image, le contraste, la couleur, la résolution, l'agrandissement ou la saturation des couleurs, et dans lequel de préférence la fonction de marquage est non linéaire en ce qui concerne au moins un des paramètres de points d'image.

9. Procédé selon l'une des revendications précédentes, **caractérisé par** les étapes suivantes :
- reconnaissance de modifications de la distance (AS) de l'objet d'entrée (EO) par rapport à la variété bidimensionnelle (B2), de modifications du points d'impact (AP) ou de modifications des propriétés de l'objet d'entrée (EO), en particulier la taille ou la forme,
- détermination de la première dérivée de temps ou de la dérivée de temps supérieure de la modification de la distance (AS), du point d'impact (AP) ou des propriétés de l'objet d'entrée (EO) ;
- modification de la fonction de marquage et/ou de la zone de marquage (A2) et/ou de l'objet de marquage en fonction de la modification de la distance (AS), du point d'impact (AP) ou des propriétés de l'objet d'entrée (EO) et/ou la première dérivée de temps ou de la dérivée de temps supérieure de ces modifications,
- dans lequel de préférence la modification de la distance (AS), du point d'impact (AP) ou des propriétés de l'objet d'entrée (EO) ou de la première dérivée de temps ou de la dérivée de temps supérieure de ces modifications est comparée à une valeur seuil prédéfinie ou réglable et la modification de la fonction de marquage et/ou de la zone de marquage (A2) et/ou de l'objet de marquage est effectuée en fonction de la valeur seuil.

10. Procédé selon l'une des revendications précédentes, **caractérisé par** les étapes suivantes :
- reconnaissance de modifications de la distance (AS) de l'objet d'entrée (EO) par rapport à la variété bidimensionnelle (B2), de modifications du point d'impact (AP) ou de modifications des propriétés de l'objet d'entrée (EO), en particulier la taille ou la forme,
- comparaison des modifications à une valeur seuil prédéfinie ou réglable et
- modification de l'état d'un appareil utilisable en fonction de la comparaison à la valeur seuil.

11. Procédé selon l'une des revendications précédentes, **caractérisé par** les étapes suivantes :
- détermination d'un point d'impact d'origine (UAP) sur une image d'origine (B1) virtuelle ou réelle à partir du point d'impact (AP) de l'objet d'entrée (EO) sur la variété bidimensionnelle (B2) au moyen d'une fonction de représentation inverse,
- détermination des données graphiques qui concordent ou établissent une corrélation avec le point d'impact d'origine (UAP), et
- sélection des données graphiques et facultativement d'un objet graphique qui comprend les données graphiques.

12. Procédé selon l'une des revendications précédentes, **caractérisé en ce que**
- la courbe de traçage se trouve au moins partiellement sur l'axe de coordonnées du système de coordonnées, se trouve de préférence en totalité sur un axe de coordonnées, plus préférablement l'axe de coordonnées s'étend vers l'objet d'entrée (EO).

13. Dispositif destiné à la manipulation de données représentées graphiquement comprenant
- une unité de calcul destinée au traitement des données,
- un écran qui représente une variété bidimensionnelle (B2) en vue de la représentation de données graphiques,
- un dispositif de mesure destiné à la détermination et à l'acquisition d'un objet d'entrée (EO), de la position de celui-ci dans l'espace ou d'une modification de la position, dans lequel le dispositif de mesure comprend un capteur, qui appartient à un groupe de capteurs optiques parmi une photodiode, une LED, une caméra ou un capteur à ultrasons,
dans lequel le dispositif est conçu et mis en place pour
- mettre à disposition les données graphiques,
- représenter les données graphiques avec une première résolution sur la variété bidimensionnelle (B2) d'un espace tridimensionnel au moyen d'une fonction de représentation (PRJ) sur l'écran,
- acquérir au moyen du dispositif de mesure un objet d'entrée (EO), à savoir une propriété de l'objet d'entrée (EO), comme la forme ou la taille, et la position de l'objet d'entrée (EO) dans l'espace tridimensionnel,
- quantifier la position de l'objet d'entrée (EO) à l'aide d'un système de coordonnées tridimensionnel, qui est établi de sorte que la variété bidimensionnelle (B2) se trouve dans une des surfaces de coordonnées du système de coordonnées tridimensionnel, et au moyen de l'unité de calcul,
- déterminer un geste tridimensionnel de cet objet d'entrée (EO) par le biais de la détermination de la distance (AS) de cet objet d'entrée (EO) par rapport à la variété bidimensionnelle (B2) le long d'une courbe de traçage entre l'objet d'entrée (EO) et un point d'impact (AP) de la courbe de traçage sur la variété bidimensionnelle (B2),
- déterminer un point de marquage sur la variété bidimensionnelle (B2) à une distance prédéfinie par rapport au point d'impact (AP),
afficher sur l'écran le point de marquage sur la variété bidimensionnelle (B2),
- dans lequel le point de marquage fait partie d'une zone de marquage (A2) ou d'un objet de marquage et dans lequel le point de marquage et/ou la zone de marquage (A2) et/ou l'objet de marquage sont déterminés au moyen d'une fonction de marquage,
- lors de la représentation de l'objet de marquage et/ou de la zone de marquage (A2) dans la variété bidimensionnelle (B2) en plus des données graphiques au moins une modification d'une caractéristique de structure de l'objet de marquage et/ou de la zone de marquage (A2) dépend d'une modification de la forme, de la taille, de la transparence ou de la réflectivité de l'objet d'entrée (EO),
dans lequel la caractéristique de structure de l'objet de marquage et/ou de la zone de marquage (A2) se compose d'un élément du groupe suivant : modèle, taille, couleur, forme, transparence, ainsi que de sa fréquence de modulation, de son rythme de modulation ou de son amplitude de modulation.

14. Dispositif selon l'une des revendications précédentes, **caractérisé en ce que** l'écran est courbé au niveau d'au moins un emplacement qui est utilisé pour l'affichage des données graphiques, dans lequel l'écran présente de préférence un plan de pixels et une surface d'écran et de préférence le plan de pixels est courbé et plus préférablement le plan de pixels s'étend à une distance constante dans le système de coordonnées par rapport à la surface d'écran.
